# EUROPEAN PATENT APPLICATION

(11) **EP 3 763 870 A1**
(43) Date of publication of application: **13.01.2021**
(21) Application number: 19764171.5
(22) Date of filing: 06.03.2019
(51) Int. Cl.: D06F 58/22

(54) **LAUNDRY PROCESSING DEVICE**

(30) Priority: 09.03.2018 CN 201810194957; 09.03.2018 CN 201810195625; 09.03.2018 CN 201810195629
(71) Applicant: Qingdao Haier Drum Washing Machine Co., Ltd., Qingdao, Shandong 266101 (CN); Haier Smart Home Co., Ltd., Qingdao, Shandong 266101 (CN)
(72) Inventor: LI, Wenwei, Qingdao, Shandong 266101 (CN); XING, Benfu, Qingdao, Shandong 266101 (CN); ZHANG, Xinhua, Qingdao, Shandong 266101 (CN); CAI, Rongshuai, Qingdao, Shandong 266101 (CN); YU, Tong, Qingdao, Shandong 266101 (CN)
(74) Representative: Beck & Rössig European Patent Attorneys
(86) International application number: PCT/CN2019/077121
(87) International publication number: WO 2019/170096

(57) **Abstract**

A laundry treatment equipment includes a lint filtration device (1); a control system adjusts a connection relation between the lint filtration device (1) and the laundry treatment equipment according to an operating state of the laundry treatment equipment; and the laundry treatment equipment further includes a cleaning device (6) for cleaning the lint filtration device (1), and the control system further adjusts the connection relation between the lint filtration device (1) and the laundry treatment equipment according to the operating state of the laundry treatment equipment and/or the operating state of the cleaning devices (6). In addition, a vibration detection device or a position detection device are further provided to an equipment structure to detect a vibration state or a position state of the lint filtration device (1) during the operation of the equipment, the effect that the control system can obtain vibration information or position information of the lint filtration device (1) at every moment can be ensured, and data support is provided for other applications. Through the laundry treatment equipment, a user can install and remove the lint filtration device and know the lint clearing condition more flexibly and conveniently with the cooperation of the control system.

## Description

### TECHNICAL FIELD

The present disclosure belongs to the field of laundry treatment, and specifically relates to a laundry treatment equipment.

### BACKGROUND

Laundry treatment equipment in the prior art, especially drying equipment, is usually provided with a device for removing lint in an air path inside the equipment. Without the device, the lint would be directly attached to a condenser along with air flow, which affects the condensation effect of the condenser, and the lint attached to the condenser is not easy to collect, which brings inconvenience to use by users. Therefore, it is necessary to arrange a lint filtration device. After intercepting the lint, the lint filtration device will inevitably face the problem of removing the lint attached thereto. Removing the lint filtration device from the laundry treatment equipment is the most direct way to clean it, but the installation of the lint filtration device and the removal of the lint filtration device are two opposite operations. Then how to achieve the coordination between the two operations so that they will not affect each other while ensuring the respective execution effects has become an urgent problem to be solved.

In order to solve the problem, in the prior art, an installation tipping bucket is customized for the lint filtration device, the installation tipping bucket can change the extension direction of the lint filtration device through the cooperation of a snap and a rotating shaft, and thus users can take down the lint filtration device. However, the installation tipping bucket itself is a movable element, and installation and use of the installation tipping bucket face the problems of whether the installation tipping bucket is overturned in place, whether the installation tipping bucket is positioned firmly, and whether the installation tipping bucket will be loose under vibration. It can be seen that this way of solving the problem will bring other problems, and there are hidden dangers that affect the usability of the lint filtration device. In addition, air flow passing through the lint filtration device during the use of the laundry treatment equipment is different in volume, and the impact on the lint filtration device is different, then the possibility of loosening the lint filtration device is different, so how to deal with this kind of situation appropriately, or further utilize the means and degree of dealing with this kind of situation in a more in-depth way to represent other aspects of the laundry treatment situation brings a deeper challenge to the usability of the laundry treatment equipment.

In view of this, the present disclosure is proposed.

### SUMMARY

The present disclosure aims to overcome the defects of the prior art and provides laundry treatment equipment. By designing the structural installation principle and installation modes of a lint filtration device and a control system cooperating with the lint filtration device, the laundry treatment equipment can adjust the linking mode and connection strength of the lint filtration device and the equipment according to the operating state of the equipment, the installation and disassembly control modes of the lint filtration device are added, and thus a user can install and remove the lint filtration device more flexibly and conveniently with the cooperation of the control system.

In order to solve the above technical problems, the basic idea of the technical solution adopted by the present disclosure is as follows:
laundry treatment equipment is provided with a lint filtration device; and a control system adjusts a connection relation between the lint filtration device and the laundry treatment equipment mainly according to an operating state of the laundry treatment equipment.

The present disclosure is further set as follows: the laundry treatment equipment includes a cleaning device for cleaning the lint filtration device.

Preferably, the control system adjusts the connection relation between the lint filtration device and the laundry treatment equipment mainly according to the operating state of the laundry treatment equipment and/or an operating state of the cleaning device.

The present disclosure is further set as follows: the cleaning device cleans the lint filtration device when the equipment executes a laundry treatment program.

Preferably, the cleaning device sprays water and/or air to the lint filtration device for cleaning the lint filtration device.

Further preferably, the cleaning device includes a first cleaning unit and a second cleaning unit. A cleaning medium of the first cleaning unit is liquid, and a cleaning medium of the second cleaning unit is gas.

The present disclosure is further set as follows: the cleaning device includes a spraying part and a guiding part which are communicated with each other internally, a channel for fluid to flow is formed inside the spraying part and the guiding part; and the cleaning device further includes a control part for controlling the channel to be opened or closed.

Preferably, the spraying part, the guiding part and the control part are connected in sequence.

Further preferably, the cleaning device is arranged above the lint filtration device.

More preferably, the spraying part is of a tubular structure, and one side of the spraying part is provided with multiple spraying holes.

More preferably, the spraying holes are distributed along an extension direction of the spraying part.

More preferably, the control part controls a flow rate of the cleaning medium flowing through the channel.

The present disclosure is further set as follows: the cleaning device further includes an adjustment part for controlling a spraying direction of the spraying part so that the cleaning device can adjust its angle for cleaning the lint filtration device.

Preferably, the adjustment part adjusts a rotation angle of the spraying part, thus the spraying part rotates around an axial direction or a direction parallel to the axial direction of the spraying part. A spraying distance is changed while the spraying direction of the spraying part being changed.

Further preferably, the adjustment part is arranged at an end of the spraying part.

More preferably, the adjustment part is arranged at an end, opposite to the guiding part, of the spraying part.

Preferably, the adjustment part is a motor.

The present disclosure is further set as follows: the lint filtration device includes a structural part and a filtering part arranged on the structural part. The structural part is for structural support, and the filtering part is for filtering.

Preferably, the cleaning device is connected to the lint filtration device.

Further preferably, the spraying part is connected to the structural part.

Further preferably, the extension direction of the spraying part is the same as an extension direction of the structural part.

Further preferably, the structural part is provided with an operating part for a user installing and removing the lint filtration device.

More preferably, the operating part is of a handle shape.

The present disclosure is further set as follows: the lint filtration device is installed on the laundry treatment equipment via an installation part.

Preferably, the installation part includes a first unit arranged on the lint filtration device and a second unit arranged on the laundry treatment equipment, and the first unit and the second unit are matched and connected.

Further preferably, the first unit and the second unit are matched and connected in a concave-convex fit.

The present disclosure is further set as follows: the control system adjusts the connection relation between the lint filtration device and the laundry treatment equipment via the installation part.

Preferably, the installation part adjusts the connection strength between the lint filtration device and the laundry treatment equipment mainly when a control condition is changed.

Further preferably, the control condition includes a current intensity, and the first unit and/or the second unit includes an electromagnet.

Preferably, at least two installation parts are provided.

Further preferably, the installation parts are arranged at different positions respectively.

More preferably, at least one of the installation parts adjusts the connection relation between the lint filtration device and the laundry treatment equipment.

The present disclosure is further set as follows: when the control system of the laundry treatment equipment sends out an instruction of executing the laundry treatment program, the connection strength between the lint filtration device and the laundry treatment equipment is enhanced. Preferably, the connection strength between the lint filtration device and the laundry treatment equipment is enhanced via the installation parts.

Preferably, when the control system of the laundry treatment equipment sends out the instruction of executing the laundry treatment program, the connection strength between the first unit and the second unit is enhanced.

Further preferably, when the control system of the laundry treatment equipment sends out the instruction of executing the laundry treatment program, the installation part adjusts the control condition accordingly, and thus adjusts the connection strength between the lint filtration device and the laundry treatment equipment.

More preferably, when the control system of the laundry treatment equipment sends out the instruction of executing the laundry treatment program, the current intensity is increased, and the connection strength between the lint filtration device and the laundry treatment equipment is enhanced.

More preferably, when the control system of the laundry treatment equipment sends out the instruction of stopping running the laundry treatment program, the connection strength between the lint filtration device and the laundry treatment equipment is lowered.

More preferably, when the control system of the laundry treatment equipment sends out the instruction of stopping running the laundry treatment program, the current intensity is lowered or zeroed, and then the connection strength between the lint filtration device and the laundry treatment equipment is adjusted.

The present disclosure is further set as follows: when the control system of the laundry treatment equipment sends out the instruction of executing the program for cleaning the lint filtration device, the connection strength between the lint filtration device and the laundry treatment equipment is enhanced.

Preferably, when the control system of the laundry treatment equipment sends out the instruction of executing the program for cleaning the lint filtration device, the connection strength between the first units and the second units is enhanced.

Further preferably, when the control system of the laundry treatment equipment sends out the instruction of executing the program for cleaning the lint filtration device, the installation parts adjust the control condition accordingly, and then adjust the connection strength between the lint filtration device and the laundry treatment equipment.

Further preferably, when the control system of the laundry treatment equipment sends out the instruction of executing the program for cleaning the lint filtration device, the current intensity is increased, and then the connection strength between the lint filtration device and the laundry treatment equipment is adjusted.

The present disclosure is further set as follows: the control system of the equipment obtains the cleanliness of the lint filtration device according to the position adjustment condition of the lint filtration device.

Preferably, the control system displays the cleanliness of the lint filtration device to a user after the laundry treatment operation is completed.

The present disclosure is further set as follows: the laundry treatment equipment includes a humidity detection device for detecting an intake air humidity of the equipment. Preferably, when the humidity detection device detects that the intake air humidity exceeds a corresponding threshold, the control system adjusts the connection relation between the lint filtration device and the laundry treatment equipment.

Further preferably, when the humidity detection device detects that the intake air humidity exceeds a corresponding threshold, the control system strengthens the connection relation between the lint filtration device and the laundry treatment equipment.

According to the present disclosure, by designing the structural installation principle and installation modes of the lint filtration device and the control system cooperating with the lint filtration device, the laundry treatment equipment can adopt corresponding and proper cleaning modes according to the vibration condition of the lint filtration device, while the cleaning efficiency and the cleaning effect are ensured, the cleaning operation is prevented from affecting the implementation of the function of the lint filtration device.

The laundry treatment equipment of the present disclosure further includes a vibration detection device for detecting the vibration condition of the lint filtration device during the operation of the laundry treatment equipment, and the cleaning device adjusts the cleaning operation modes of the lint filtration device according to the detection results of the vibration detection device.

Preferably, the cleaning device determines one or more items from a group of the cleaning angle, cleaning intensity, cleaning medium of the lint filtration device according to the detection result of the vibration detection device.

According to the present disclosure, by designing the structural installation principle and installation modes of the lint filtration device and the control system cooperating with the lint filtration device, the laundry treatment equipment can adopt corresponding and proper cleaning modes according to the vibration condition of the lint filtration device. While the cleaning efficiency and the cleaning effect are ensured, the cleaning operation is prevented from affecting the implementation of the function of the lint filtration device.

The present disclosure is further set as follows: the lint filtration device is arranged on the laundry treatment equipment via the installation part.

Preferably, the vibration detection device detects the vibration condition of the lint filtration device via the installation part.

The vibration detection device includes a switch for controlling the working state of the vibration detection device.

The present disclosure is further set as follows: when the laundry treatment equipment performs the cleaning operation, the vibration detection device detects the vibration condition of the lint filtration device. When the detection result of the vibration detection device meets the corresponding adjustment conditions of the cleaning operation mode, then the cleaning device adjusts the cleaning operation mode.

Preferably, the cleaning operation mode includes one or more items from the group of the cleaning angle, cleaning intensity, cleaning medium.

The present disclosure is further set as follows: the vibration detection device includes a first detection piece and a second detection piece. The first detection piece detects the vibration condition of the lint filtration device; and the second detection piece senses the change of the first detection piece, and generates a detection result.

Preferably, the first detection piece is arranged on the lint filtration device, and the change of the first detection piece occurs according to the vibration condition of the lint filtration device.

Further preferably, at least two vibration detection devices are provided, and each of the vibration detection devices detects the vibration condition of a part of the lint filtration device respectively.

The present disclosure is further set as follows: the vibration detection device is provided with at least two second detection pieces for detecting different levels of the vibration condition. The second detection pieces detect the vibration condition in different intensities and generate signals respectively.

Preferably, the first detection piece includes a magnet; the second detection piece is a reed switch; and a distance between each of the second detection pieces and the first detection piece is different.

Further preferably, the first detection piece includes a magnet; the second detection piece is a reed switch; and the second detection pieces have different induction abilities for magnetism.

According to the present disclosure, by designing the structural installation principle and installation modes of the lint filtration device and the control system cooperating with the lint filtration device, the laundry treatment equipment can judge the cleaning time according to the position change of the lint filtration device, and collect data generated by the lint filtration device for use while ensuring the using effect of the lint filtration device.

The laundry treatment equipment of the present disclosure further includes a position detection device for detecting the position state of the lint filtration device during the operation of the laundry treatment equipment. The cleaning device determines the time of executing the cleaning operation according to the detection results of the position detection device.

Preferably, the cleaning device determines the time of adjusting the cleaning modes and/or ending the cleaning operation according to the detection results of the position detection device.

The present disclosure is further set as follows: the position detection device detects the relative position state between the lint filtration device and the laundry treatment equipment and generates corresponding signals. The control system adjusts the operation of the cleaning devices according to the signals.

Preferably, the position detection device includes a detection connecting piece, a detection point and a controller which mutually cooperate with one another. The detection connecting piece obtains the relative positional relation between the lint filtration device and the laundry treatment equipment, controls the connection relation between the detection points and the controllers mainly based on the relative positional relation to generate corresponding signals, and then detects the position state of the lint filtration device.

Further preferably, the relative position between the detection point and the controller is fixed, and the detection point and the controller are controlled by the detection connecting piece to be connected or disconnected.

More preferably, at least two detection points are provided, the detection points respectively correspond to different detection values, and different detection signals are generated when the detection points are connected to the controllers respectively. The detection connecting piece connects the detection points with the controllers according to the relative positional relation between the lint filtration device and the laundry treatment equipment.

More preferably, the detection connecting piece is connected to the lint filtration device.

The present disclosure is further set as follows: the position detection device includes a return piece for restoring a position of the detection connecting piece, then the detection points are disconnected from the controllers, and corresponding signal are generated, so that the cleaning device adjusts the cleaning mode/end the cleaning operation.

Preferably, the cleaning mode includes one or more items from a group of the cleaning angle, cleaning intensity, cleaning medium.

Preferably, restoring the position includes restoring to an initial position.

The present disclosure is further set as follows: the lint filtration device is arranged on the laundry treatment equipment via an installation part.

Further preferably, at least two installation parts are provided.

More preferably, the installation parts are arranged at different positions correspondingly.

The present disclosure is further set as: the position detection device detects the position state of the lint filtration device by detecting the position change of the installation parts.

The position detection device is connected to the installation parts.

Further preferably, the detection connecting piece is connected to the installation parts.

The present disclosure is further set as follows: at least two cleaning devices are provided, and the positions of the cleaning devices relative to the lint filtration device are different.

Preferably, at least one of the cleaning devices is arranged above the lint filtration device.

Further, at least two of the cleaning devices are different in time and/or mode of executing and/or adjusting and/or ending the cleaning operation determined according to the detection results of the position detection device, so that the cleaning operations executed by at least two of the cleaning devices are nonsynchronous.

Preferably, the control system of the equipment obtains the cleanliness of the lint filtration device according to the detection result of the position detection device and/or the working state of the cleaning devices.

Preferably, the control system displays the cleanliness of the lint filtration device to a user after the laundry treatment equipment completes the laundry treatment operation.

The present disclosure is further set as follows: the laundry treatment equipment includes a humidity detection device for detecting an intake air humidity of the equipment. Preferably, when the humidity detection device detects that the intake air humidity exceeds a corresponding threshold, the control system lowers a threshold for judging the starting time of the cleaning devices.

Preferably, when the humidity detection device detects that the intake air humidity exceeds a corresponding threshold, the control system increases the threshold for judging the stopping time of the cleaning devices.

Through the above design, the cleaning devices are more sensitive to the induction for the lint filtration device and clear the lint when the lint filtration device has a hidden danger of lint accumulation, so that the situation that lint with high humidity caused by humid air are attached to the lint filtration device for a long time and are difficult to remove is avoided. Through the design, the cleaning time of the lint filtration device is prolonged on the one hand, and the cleaning frequency of the lint filtration device is increased on the other hand, which is beneficial to ensuring timely clearing of the lint attached to the lint filtration device under the condition of high humidity.

The present disclosure is further set as follows: when the humidity detection device detects that the intake air humidity exceeds a corresponding threshold, the lint filtration device is sprayed with gas and kept for a certain period of time after the cleaning devices complete the cleaning operation on the lint filtration device each time.

Through the above-mentioned design, the cleaning devices dry the lint filtration device after clearing the lint attached to the lint filtration device, and thus the situation that the lint attached to the lint filtration device subsequently are difficult to clear due to the increase in air humidity is avoided.

The present disclosure is further set as follows: the laundry treatment equipment includes a washing machine/drying machine/washing-drying integrated machine.

After adopting the above technical solutions, the present disclosure has the following beneficial effects compared with the prior art.
1. Through the laundry treatment equipment introduced in the present disclosure, the control function on the lint filtration device is added during the installation and/or removal operation of the lint filtration device, thus a locking control switch that needs to be manually controlled, such as a buckle device in the prior art does not need to be added during use of the equipment, and a user can install and/or remove the lint filtration device more conveniently and rapidly without any obstruction.
2. Through the laundry treatment equipment introduced in the present disclosure, there is no need to add any auxiliary components for installation and/or removal operations and positioning, such as drawers and revolving doors for containing lint filtration devices in the prior art on the basis of original laundry treatment equipment. The structure design of the equipment is greatly simplified, the coordination of components does not increase the design burden, structural burden and maintenance burden of the equipment; and the hidden danger to the installation stability of the lint filtration device caused by adding additional auxiliary components is avoided.
3. Through the laundry treatment equipment introduced in the present disclosure, an additional operation time judgment program for installation and/or removal operations does not need to be added to the equipment. The operating state of the equipment is used as the basis for time judgment in the technical solution of the present disclosure. After all, it is inconvenient to install and/or remove the lint filtration device during the operation of the equipment, then whether the equipment is operating/whether the corresponding program is running is used as the basis for time judgment and can be completed only through an original monitoring program of the equipment. Such as power switch monitoring and a control system that controls the program operation (such as a drying program, a washing program and a rinsing program), and on-off of power and a starting instruction of the program running are used as the basis for judging whether the equipment operation state changes. For another example, the operation state of the equipment is judged according to data collected by a monitoring program of a blowing unit.
4. Through the laundry treatment equipment introduced in the present disclosure, the connection function of the lint filtration device and the laundry treatment equipment is realized by the installation parts arranged at multiple positions, so that the equipment controls the lint filtration device in a multi-point mode. The lint filtration device can be connected with the equipment more uniformly and firmly from multiple positions, and the effect that the position of the lint filtration device is more stable when the equipment is operating is ensured. The equipment can obtain data generated by the position change of the lint filtration device through system control to represent the amount of lint attached to the lint filtration device.
5. Through the laundry treatment equipment introduced in the present disclosure, the cleaning devices are further provided. During the operation of the laundry treatment equipment, the lint filtration device is closely connected with the laundry treatment equipment. The cleaning operation of the process will not affect the connection between the lint filtration device and the equipment, and the cleaning effect on the lint filtration device is better when the lint filtration device is kept in a stable position. The cleaning devices are reasonable in structure and arrangement position, and perform spraying on the lint filtration device from a position above the lint filtration device, which is beneficial to making full use of sprayed cleaning medium to better flush the lint filtration device.
6. Through the laundry treatment equipment introduced in the present disclosure, various spraying medium can be selected, and multiple medium can be used selectively or alternately. For example, the lint filtration device can be sprayed with liquid when the lint filtration device starts to operate. When the vibration of the lint filtration device is relieved and the vibration intensity is reduced to a certain value, the cleaning devices then adjusts the spraying medium as gas, thus the lint filtration device is cleaned based on the premise of satisfying the filtering function of the lint filtration device. The cleaning process is prevented from affecting the cleaning function of the lint filtration device.
7. Through the laundry treatment equipment introduced in the present disclosure, the connection between the lint filtration device and the equipment can be enhanced when the lint filtration device is cleaned, while further ensuring the cleaning effect. The cleaning effect on the lint filtration device is represented by the connection degree and the connection condition between the lint filtration device and the equipment.
8. Through the laundry treatment equipment introduced in the present disclosure, the structure of the lint filtration device is improved, the design of a handle is provided. In combination with the designed installation positions of the lint filtration device on the equipment, the user can simply take the lint filtration device out of the equipment via a simple lifting operation. Similarly, the user can put the lint filtration device into the equipment by a simple push operation; the whole structure of the equipment is simplified on the one hand. The structural design of the lint filtration device is simplified without affecting the usability of the lint filtration device on the other hand, and the lint filtration device can be installed in place stably and firmly without auxiliary structures such as drawers.
9. Through the laundry treatment equipment introduced in the present disclosure, the cleaning devices are connected to the lint filtration device, thus when the spraying part cleans the lint filtration device, the relative positional relation between the spraying part and the lint filtration device can be ensured, and then medium sprayed by the spraying part is accurately sprayed to the lint filtration device. Further, the vibration generated by the lint filtration device will drive the spraying part to vibrate together, so that the lint filtration device and the spraying parts vibrate synchronously and therefore the effectiveness of the spraying direction and spraying positions is ensured. In this technical solution, a medium guide part of the spraying part can be set as a soft and elastic structure, for example, rubber tubes.
10. Through the laundry treatment equipment introduced in the present disclosure, different cleaning devices are adopted to perform cleaning operations for different cleaning medium. Preferably, multiple first cleaning units and/or second cleaning units are adopted and arranged at intervals; and then different cleaning devices are used for spraying different medium. The working mode of the control system can be simplified, and a third set of cleaning devices can be additionally arranged for spraying special cleaning agents by analogy.
11. Through the laundry treatment equipment introduced in the present disclosure, by arranging the adjustment part on the spraying part, the spraying part can adjust the spraying angle, and preferably the adjustment part can drive the spraying part to rotate and then adjust the spraying angle. Further preferably, the rotation axial direction of the adjustment part and the axial direction of the spraying part are parallel and are not in the same straight line; therefore the adjustment part can not only adjust the angle of the spraying part, but also adjust the spraying distance from the spraying part to the lint filtration device.
12. Through the laundry treatment equipment introduced in the present disclosure, the vibration detection devices or the position detection device are added to the equipment structure to detect the vibration state or position state of the lint filtration device during the operation of the equipment. The effect that the control system can obtain vibration information or position information of the lint filtration device at every moment can be ensured, and data support is provided for other applications.
13. Through the laundry treatment equipment introduced in the present disclosure, the vibration detection devices are added to the equipment structure to monitor the vibration state of the lint filtration device in real time when the equipment is operating so as to ensure that the control system can obtain the vibration information of the lint filtration device at every moment. Data support is provided for other applications to determine the best working mode of the cleaning devices. Due to the difference in amount and condition of lint attached to the lint filtration device, the vibration condition of the lint filtration device will generate corresponding change. When the vibration condition of the lint filtration device meets a certain condition, it can be determined that there are too many lint accumulated on the lint filtration device, the cleaning operation should be performed. Further, the control system controls the cleaning devices to start to clean the lint filtration device. Moreover, as the lint are cleared, the amount of the lint attached to the lint filtration device is getting less and less, and the cleaning mode for the lint should be further adjusted to ensure that the cleaning operation mode meets the cleaning operation of all stages, individual treatment of the cleaning operations at all stages takes full consideration of the special circumstances while avoiding the impact of the cleaning operations on the realization of the filtering function of the lint filtration device. It can be seen that the amount and attachment condition of lint attached to the lint filtration device can be judged according to the vibration condition of the lint filtration device, then the cleaning operation modes can be judged, so that the cleaning devices operate based on the specific situation of the lint filtration device, rather than the abstract conception of "continuous operation time" in the prior art. The cleaning timeliness of the lint filtration device is further ensured, and the situation that frequent cleaning operations affect the use of the lint filtration device or increase the control burden of the system is avoided.
14. Through the laundry treatment equipment introduced in the present disclosure, the position detection device is added to the equipment structure to monitor the position state of the lint filtration device in real time when the equipment is operating so as to ensure that the control system can obtain the position information of the lint filtration device at every moment. Data support is provided for other applications to determine the start time of the cleaning devices. Due to the different amounts and attachment condition of lint attached to the lint filtration device, the position of the lint filtration device will generate corresponding change. Alternatively, components for providing a certain margin for position changes may be prearranged on the structure design of the lint filtration device and/or the installation parts, and thus the lint filtration device can change the position correspondingly according to the amount and distribution positions of lint attached to the lint filtration device so as to represent the attachment condition of the lint. When the position state of the lint filtration device satisfies certain conditions, it can be determined that there are extra lint accumulated on the lint filtration device, and the cleaning operation should be performed. Further, the control system controls the cleaning devices to start to clean the lint filtration device. It can be seen that the amount and attachment condition of lint attached to the lint filtration device can be judged according to the position state of the lint filtration device, then the cleaning operation time can be judged, so that the cleaning devices operate based on the specific situation of the lint filtration device, rather than the abstract conception of "continuous operation time" in the prior art. The cleaning timeliness of the lint filtration device is further ensured, and the situation that frequent cleaning operations affect the use of the lint filtration device or increase the control burden of the system is avoided.
15. Through the laundry treatment equipment introduced in the present disclosure, the cleanliness of the lint filtration device is obtained according to the detection results of the vibration detection devices or the position detection device and/or the working state of the cleaning devices, and is fed back to a user, then the user can have an intuitive feeling about the cleaning condition of the lint filtration device, and it is ensured that the user has a grasp of the working condition of the lint filtration device and the working condition of the cleaning devices.
16. Through the laundry treatment equipment introduced in the present disclosure, the connection strength between the lint filtration device and the equipment can be adjusted; the technical solution is wide in application range and can be applied to laundry treatment equipment such as washing machines, drying machines and washing-drying integrated machines. Since when a washing machine executes a laundry treatment program, the impact effect of water flow or blown air on the lint filtration device is relatively large, and then the lint filtration device is prone to being loosened. The technical solution of the present disclosure completely solves the technical problem.

The specific embodiments of the present disclosure will be described in further detail below in conjunction with the accompanying drawings.

### BRIEF DESCRIPTION OF THE DRAWINGS

The accompanying drawings are used as a part of the present disclosure to provide a further understanding of the present disclosure. The exemplary embodiments and descriptions of the present disclosure are used to explain the present disclosure, but do not constitute an improper limitation to the present disclosure. Apparently, the accompanying drawings in the following description are only some embodiments, and those of ordinary skill in the art can obtain other drawings according to these accompanying drawings without creative work. Wherein:
Fig. 1 is a structural schematic diagram of a lint filtration device in an embodiment of the present disclosure;
Fig. 2 is a structural schematic diagram of a part of laundry treatment equipment in an embodiment of the present disclosure;
Fig. 3 is a structural schematic diagram of a part of laundry treatment equipment in an embodiment of the present disclosure;
Fig. 4 is a structural schematic diagram of a part of laundry treatment equipment in an embodiment of the present disclosure;
Fig. 5 is a structural schematic diagram of a part of laundry treatment equipment in an embodiment of the present disclosure;
Fig. 6 is a structural schematic diagram of a part of laundry treatment equipment in an embodiment of the present disclosure;
Fig. 7 is a structural schematic diagram of a part of laundry treatment equipment in an embodiment of the present disclosure;
Fig. 8 is a structural schematic diagram of a part of laundry treatment equipment in an embodiment of the present disclosure; and
Fig. 9 is a structural schematic diagram of a part of laundry treatment equipment in an embodiment of the present disclosure.

In the figures: 1, lint filtration device; 11, operating part; 12, structural part; 121, buckle; 13, filtering part; 21, first unit of first installation part; 22, first unit of second installation part; 23, first unit of third installation part; 31, first unit of installation part; 32, second unit of installation part; 33, adjustment piece of installation part; 41, detection connecting piece; 42, first detection point; 43, controller; 44, return piece; 45, second detection point; 6, cleaning device; 61, spraying part; 611, spraying hole; 62, guiding part; 63, control part; and 64, adjustment part.

It should be noted that these accompanying drawings and text descriptions are not intended to limit the scope of the disclosure in any way, but to explain the concept of the present disclosure for those skilled in the art by referring to specific embodiments.

### DETAILED DESCRIPTION

In order to make the objectives, technical solutions and advantages of the embodiments of the present disclosure clearer, the technical solutions in the embodiments will be described clearly and completely in conjunction with the accompanying drawings in the embodiments of the present disclosure. The following embodiments are used to illustrate the present disclosure, but not to limit the scope of the present disclosure.

In the description of the present disclosure, it should be noted that the orientation or positional relation indicated by the terms such as "upper", "lower", "front", "rear", "left", "right", "vertical", "inner" and "outer" is based on the orientation or positional relation shown in the accompanying drawings, is only for the convenience of describing the present disclosure and simplifying the description, and does not indicate or imply that referred devices or elements must have a specific orientation, be constructed and operated in a specific orientation, and therefore cannot be understood as a limitation to the present disclosure.

In the description of the present disclosure, it should be noted that unless otherwise clearly specified and limited, the terms "installed", "connected" and "connection" should be understood in a broad sense. For example, connection may be fixed connection or detachable connection or integral connection; connection may also be mechanical connection or electrical connection; connection may also be directly connection or indirect connection through an intermediate medium. For those of ordinary skill in the art, the specific meaning of the above-mentioned terms in the present disclosure can be understood in specific situations.

The present disclosure introduces a laundry treatment equipment which is provided with a lint filtration device. A control system mainly adjusts the connection relation between the lint filtration device and the laundry treatment equipment according to the operating state of the laundry treatment equipment. A control function on the lint filtration device is added during the installation and/or removal operation of the lint filtration device, thus a locking control element that needs to be manually controlled, such as a buckle device in the prior art does not need to be provided during use of the equipment, and users can install and/or remove the lint filtration device more conveniently and rapidly without any obstruction. Further, according to the technical solution introduced in the present disclosure, there is no need to add any auxiliary components, such as drawers and revolving doors for containing lint filtration devices in the prior art, for installation and/or removal operations and positioning on the basis of original laundry treatment equipment, the structure design of the equipment is greatly simplified, the coordination of components does not increase the design burden, structural burden and maintenance burden of the equipment, and the hidden danger to the installation stability of the lint filtration device caused by adding additional auxiliary components is avoided. Furthermore, according to the technical solution introduced in the present disclosure, additional operation time judgment programs for installation and/or removal operations do not need to be added to the equipment, the operating state of the equipment is used as the basis for time judgment in the technical solution of the present disclosure. After all, it is more harmful to install and/or remove the lint filtration device during the operation of the equipment, then whether the equipment is operating or not is used as the basis for time judgment and can be completed only through an original monitoring program of the equipment, such as power switch monitoring, the on/off condition of power is taken as the basis for judging whether the equipment operating state has changed; for another example, the operation state of the equipment is judged according to data collected by a monitoring program for an air pump.

According to the laundry treatment equipment introduced in the present disclosure, a vibration detection device or a position detection device is added to the equipment structure to detect the vibration state or position state of the lint filtration device during the operation of the equipment, the effect that the control system can obtain vibration information or position information of the lint filtration device at every moment can be ensured, and data support is provided for other applications.

### Embodiment 1

According to laundry treatment equipment of this embodiment, a lint filtration device is installed on the laundry treatment equipment via an installation part. The installation part in this embodiment may be an independent component, which can be detachably connected with at least one of the laundry treatment equipment and the lint filtration device. Further, the installation part in this embodiment may be a set of components cooperating with each other. By designing the installation part, while the lint filtration device and the laundry treatment equipment can be connected, burden on the structural design of the lint filtration device is avoided.

Further, the installation part of the laundry treatment equipment in this embodiment includes a first unit, arranged on the lint filtration device, of the installation part and a second unit, arranged on the laundry treatment equipment, of the installation part. The first unit of the installation part and the second unit of the installation part can be cooperatively connected. The first unit of the installation part is a protrusion, and the second unit of the installation part is a groove matched with the protrusion. Through the above-mentioned design, the lint filtration device can be installed on the laundry treatment equipment more quickly and conveniently.

Preferably, one of the first unit of the installation part and the second unit of the installation part is a magnet, and the other is a material that can be attracted by the magnet, so that the first unit of the installation part and the second unit of the installation part are connected via magnetic attraction during installation.

### Embodiment 2

The difference between laundry treatment equipment in this embodiment and the laundry treatment equipment in the foregoing embodiment is that a control system can adjust the connection relation between the lint filtration device and the laundry treatment equipment through an installation part. When the control system adjusts the connection relation between the lint filtration device and the laundry treatment equipment, the connection strength between the lint filtration device and the laundry treatment equipment can be adjusted by changing the control condition. Wherein, the control condition may be current intensity, and the first unit of the installation part includes an electromagnet and/or the second unit of the installation part includes an electromagnet.

Preferably, after installation of the lint filtration device in this embodiment is completed, the first unit, arranged on the lint filtration device, of the installation part is connected to a current conducting device of the laundry treatment equipment. When the laundry treatment equipment starts to operate, transmitting current to the first unit of the installation part via the current conducting device, so that the first unit of the installation part is magnetized, then the first unit of the installation part and the second unit of the installation part are attracted together. During implementation, current connected to the current conducting device can be adjusted to change the connection strength between the first unit of the installation part and the second unit of the installation part.

Alternatively, the laundry treatment equipment in this embodiment can adjust the magnetism generated by the second unit of the installation part, thus after the first unit of the installation part is installed in place, the second unit of the installation part generates magnetism, and therefore the first unit of the installation part and the second unit of the installation part can be attracted together.

### Embodiment 3

The difference between laundry treatment equipment in this embodiment and the laundry treatment equipment in the foregoing embodiment is that: the first unit of the installation part or the second unit of the installation part is magnetic, and the magnetic poles of the opposite sides of the first unit of the installation part and the second unit of the installation part are the same. Thus, a certain gap is maintained between the first unit of the installation part and the second unit of the installation part when the lint filtration device is installed. Meanwhile, the laundry treatment equipment is provided with a device which can be connected to the first unit of the installation part/the second unit of the installation part. Then magnetism of the first unit of the installation part/the second unit of the installation part disappears or becomes reverse magnetism while the device transmitting current to the first unit of the installation part/the second unit of the installation part. Then the first unit of the installation part and the second unit of the installation part can be firmly connected together under an action of magnetism. When a laundry treatment program ends, a control system cuts off current, so that the first unit of the installation part and the second unit of the installation part restore homopolar magnetism again and repel each other, and the gap is formed between the first unit of the installation part and the second unit of the installation part, so that a user can easily remove the lint filtration device from the equipment.

Further, multiple installation parts are arranged in this embodiment, the multiple installation parts are arranged at different positions, and at least one of the multiple installation parts can adjust the connection relation between the lint filtration device and the laundry treatment equipment. Through the design, the multiple installation parts jointly perform the function of installing and positioning the lint filtration device, and thus the lint filtration device is installed more stably. However, when only one installation part has the function of adjusting the connection strength, another installation parts are structures for positioning, then the connecting force generated by the one installation part with the function of adjusting the connection strength is evenly transmitted to the whole lint filtration device.

It can be seen that through the laundry treatment equipment introduced in the present disclosure, the connection function of the lint filtration device and the laundry treatment equipment is realized by the installation parts arranged at multiple positions, so that the equipment controls the lint filtration device in a multi-point mode. The lint filtration device can be connected with the laundry treatment equipment more uniformly and firmly at multiple positions, and the effect that the position of the lint filtration device is more stable when the equipment is operating is ensured. Also, the laundry treatment equipment can obtain data generated by the position change of the lint filtration device by system control to represent the amount of lint attached to the lint filtration device.

### Embodiment 4

The difference between laundry treatment equipment in this embodiment and the laundry treatment equipment in the foregoing embodiment is that: when the control system of the laundry treatment equipment gives an instruction of executing a laundry treatment program, the connection strength between the lint filtration device and the laundry treatment equipment is enhanced. Preferably, the connection strength between the lint filtration device and the laundry treatment equipment is enhanced by the installation part. It can be seen that the laundry treatment equipment in this embodiment does not start a program of adjusting the connection strength of the lint filtration device after being turned on, but starts the program of adjusting the connection strength when the laundry treatment equipment starts to run the laundry treatment program, so that the adjustment of the lint filtration device is more suitable for the operation of the laundry treatment equipment.

Preferably, the control system of the laundry treatment equipment detects in real time whether the laundry treatment equipment starts to run the laundry treatment program. If the laundry treatment equipment starts to run the laundry treatment program, the connection strength between the first unit of the installation part and the second unit of the installation part is enhanced.

Further preferably, when the control system of the laundry treatment equipment gives the instruction of executing the laundry treatment program, the installation part adjusts the control condition accordingly, and then adjusts the connection strength between the lint filtration device and the laundry treatment equipment.

Further preferably, the control system of the laundry treatment equipment detects in real time whether the laundry treatment equipment starts to run the laundry treatment program; if the laundry treatment equipment starts to run the laundry treatment program, the current intensity is increased to adjust the connection strength between the lint filtration device and the laundry treatment equipment.

### Embodiment 5

The difference between laundry treatment equipment in this embodiment and the laundry treatment equipment in the foregoing embodiment is that: the laundry treatment equipment in this embodiment includes a cleaning device for cleaning the lint filtration device. The lint filtration device adjusts the connection relation with the laundry processing equipment mainly according to the operating state of the laundry treatment equipment and/or the operating state of the cleaning device.

Preferably, the first unit of the installation part or the second unit of the installation part in this embodiment is magnetic. The first unit of the installation part and the second unit of the installation part can be attracted together when being installed, and thus such connection strength can meet the impact requirements of lint filtering to a certain extent. When the laundry treatment equipment detects the start of the lint cleaning operation, the connection strength between the equipment and the lint filtration device is enhanced, so that even if water/air flow impacts the lint filtration device, the lint filtration device will not be detached, and the lint filtration device can achieve stable filtration.

Alternatively, the first unit of the installation part or the second unit of the installation part in this embodiment is nonmagnetic, but can become magnetic under the control of the laundry treatment equipment to realize the connection. Then in actual use, when the laundry treatment equipment is turned on, the connection strength of the lint filtration device is enhanced. When the laundry treatment equipment detects the start of the program for cleaning the lint filtration device, the connection strength of the lint filtration device is further enhanced.

Through the laundry treatment equipment introduced in the present disclosure, the lint filtration device is closely connected with the laundry treatment equipment, and the process of cleaning operation will not affect the connection between the lint filtration device and the laundry treatment equipment, and the cleaning effect of the lint filtration device is better since the lint filtration device is kept in a stable position.

Further, the laundry treatment equipment in this embodiment can selectively perform the operations of spraying water, spraying air, spraying a mixture of water and air, and alternately spraying water and air during the cleaning operation to the lint filtration device, and the lint filtration device is cleaned in a more proper mode according to the specific conditions of the lint filtration device.

### Embodiment 6

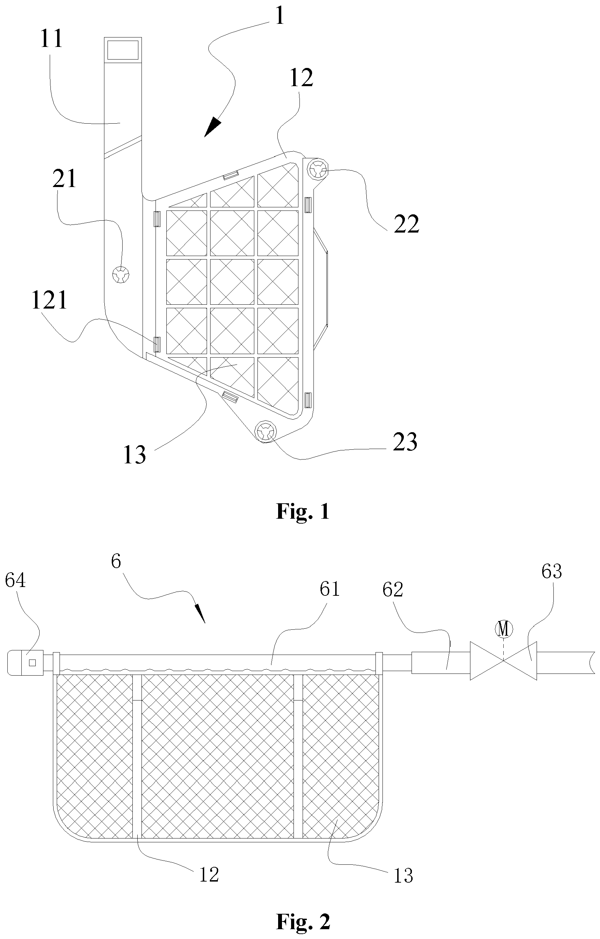

As shown in Fig. 1, the difference between laundry treatment equipment in this embodiment and the laundry treatment equipment in the foregoing embodiment is that: the lint filtration device 1 in this embodiment includes a structural part 12 and a filtering part 13 arranged on the structural part 12. The structural part 12 is mainly used for structural support, and the filtering part 13 is mainly used for achieving the filtering function. Further, the structural part 12 is provided with an operating part 11 through which a user can install and remove the lint filtration device 1. The operating part 11 is of a handle shape. The lint filtration device 1 in this embodiment is plate-like as a whole, and the operating part 11 is arranged on one side of the lint filtration device 1, so that the structural design does not affect the lint filtering function of the lint filtration device.

Preferably, the installation part in this embodiment includes a first installation part, a second installation part and a third installation part which are distributed. Multiple installation parts are all arranged on an edge of the structural part 12, so that the connecting and positioning of installation can be realized at multiple positions, and the filtering function of the lint filtration device 1 is not affected. Further, multiple first units of the installation parts in this embodiment are all arranged on the lint filtration device 1 and are integrated with the lint filtration device. In addition, the multiple installation parts are arranged asymmetrically, so that the installed lint filtration device remains stable even under multi-angle impacts.

Further, a size of the first installation part in this embodiment is smaller than a size of the second installation part and the third installation part. The first installation part, the second installation part and the third installation part are all cylindrical. Wherein the first unit 21 of the first installation part is arranged on the operating part 11, the first unit of the second installation part is arranged on a lowermost end of the structural part 12, and the first unit 23 of the third installation part is arranged on a uppermost end of the structural part 12 (the upper and lower in this embodiment are the directions shown in Fig. 1, not the actual use direction). When installing the lint filtration device, the first unit 22 of the second installation part and the first unit of the third installation part are not connected with the second unit of the first installation part due to the size mismatch, installation errors are avoided. And the first unit 23 of the third installation part and the first unit 22 of the second installation part are not arranged in a straight line, so that installation errors between the two first units are avoided. Preferably, the first unit 23 of the third installation part and the first unit 22 of the second installation part are also different in size.

In addition, the size of the first unit of the first installation part is designed to be the smallest, and the first unit of the first installation part is arranged on the operating part 11, so that during the installation/removal operation, the installation/removal operation is performed at this position at first, the connection strength at this position is the lowest, and operation by a user is more convenient.

### Embodiment 7

The difference between laundry treatment equipment in this embodiment and the laundry treatment equipment in the foregoing embodiment is that: the first installation part, the second installation part and the third installation part in this embodiment are different in cross-sectional shape, and then the problem that first units of the installation parts are connected to unmatched second units of the installation parts during the installation process is avoided. As shown in Fig. 1, the structural part 12 in this embodiment is of a two-layer structure, a middle part of the structural part is a hollowed-out structure, and a cavity is formed between the two layers. The filtering part 13 is arranged in the cavity. The two-layer structure of the structural part 12 is connected via buckles 121. Preferably, the buckles 121 are arranged along a border of the structural part 12.

### Embodiment 8

For the laundry treatment equipment in this embodiment, the cleaning device determines cleaning angle and/or cleaning intensity and/or cleaning medium for the lint filtration device according to detection results of a vibration detection device. The cleaning medium includes gas and/or liquid.

Further, the cleaning device in this embodiment includes a first cleaning unit and a second cleaning unit. The first cleaning unit adopts liquid as the cleaning medium, and the second cleaning unit adopts gas as the cleaning medium.

Through the laundry treatment equipment introduced in this embodiment, various spraying medium can be selected, and multiple media can be used selectively or alternately. For example, liquid spraying operation is performed on the lint filtration device in the early part of the operation of the lint filtration device, when the vibration of the lint filtration device is relieved and the vibration intensity is reduced to a certain value, the cleaning device then adjusts the spraying medium as gas. Thus the lint filtration device is cleaned based on the premise of satisfying the filtering function of the lint filtration device, and the cleaning process is prevented from affecting the filtering function of the lint filtration device. Different cleaning units are adopted to perform cleaning operations for different cleaning medium. Preferably, multiple first cleaning units and/or second cleaning units are adopted and arranged at intervals; and then different cleaning units are used for spraying different medium, the working mode of a control system can be simplified. And a third cleaning unit is additionally arranged for spraying special cleaning agents, the rest can be done in the same manner.

### Embodiment 9

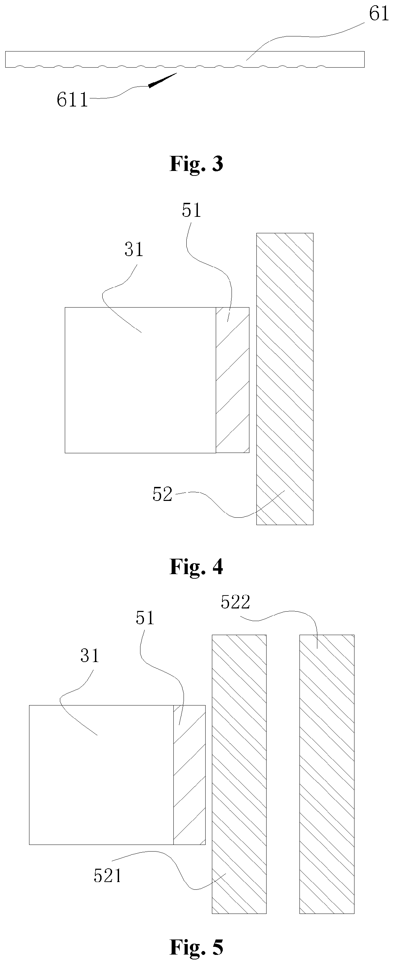

As shown in Figs. 2 and 3, the difference between laundry treatment equipment in this embodiment and the laundry treatment equipment in Embodiment 8 is that: the cleaning device 6 includes a spraying part 61 and a guiding part 62 which communicate with each other internally, so that a channel for allowing fluid to flow is formed in the spraying part 61 and the guiding part 62. The cleaning device 6 further includes a control part 63 for controlling the channel to be opened and closed.

Further, the cleaning device in this embodiment is arranged above the lint filtration device; and the cleaning device mainly performs spraying downwards.

Through the laundry treatment equipment introduced in the present disclosure, the cleaning device is reasonable in structure and arrangement position, and performs spraying to the lint filtration device from a position above the lint filtration device, which is beneficial to making full use of sprayed cleaning medium to better flush the lint filtration device.

Further, the spraying part, the guiding part and the control part in this embodiment are connected in sequence. The spraying part is of a tubular structure, and a side, facing the lint filtration device, of the spraying part is provided with multiple spraying holes. The multiple spraying holes are distributed along an extension direction of the spraying part. The control part can control the flow rate of the cleaning medium passing through the channel.

Further, the cleaning device in this embodiment further includes an adjustment part for controlling a spraying direction of the spraying part, so that the cleaning device can adjust its angle for cleaning the lint filtration device. Through the laundry treatment equipment introduced in this embodiment, the cleaning device is connected to the lint filtration device, thus when the cleaning device clean the lint filtration device, the relative positional relation between the spraying part and the lint filtration device can be ensured. And then medium sprayed by the spraying part are accurately sprayed to the lint filtration device. Further, the vibration generated by the lint filtration device will drive the spraying part to vibrate together, so that the lint filtration device and the spraying part vibrate synchronously, and therefore the effectiveness of the spraying direction and spraying positions is ensured. Furthermore, a motor is adopted as the adjustment part for adjusting a rotation angle of the spraying part, then the spraying part can rotate around the axial direction/direction parallel to the axial direction of the spraying part, and a spraying distance is changed while the spraying angle of the spraying part is changed. Through the laundry treatment equipment introduced in this embodiment, by arranging the adjustment part on the cleaning device, the spraying part can adjust the spraying angle. Preferably the adjustment part can drive the spraying part to rotate and then adjust the spraying angle. Further preferably, the rotation axial direction of the adjustment part and the axial direction of the spraying part are parallel and are not in one same straight line; therefore the adjustment part can not only adjust the spraying angle of the spraying part, but also adjust the spraying distance from the spraying part to the lint filtration device.

### Embodiment 10

For the laundry treatment equipment in this embodiment, a vibration detection device acquires a vibration condition of the lint filtration device by detecting a vibration condition of the installation part.

Further, the vibration detection device in this embodiment includes a switch for controlling the working state of the vibration detection device. With the laundry treatment equipment introduced in this embodiment, by additionally arranging the switch on the vibration detection device, a user can control whether to turn on the vibration detection device. If the vibration detection device is turned on, the laundry treatment equipment performs adjustment according to the vibration condition of the lint filtration device during operation. If the switch is turned off, the vibration detection device does not detect the vibration condition of the lint filtration device, then the laundry treatment equipment operates mainly according to user setting rather than the actual operation of the laundry treatment equipment, and thus the user can select operation targets of the laundry treatment equipment.

### Embodiment 11

As shown in Fig. 2, in laundry treatment equipment of this embodiment, the lint filtration device includes a structural part 12 and a filtering part 13 arranged on the structural part 12. The structural part 12 is mainly used for supporting structure, and the filtering part 13 is mainly used for achieving the filtering function.

Further, the cleaning device in this embodiment is connected to the structural part of the lint filtration device, and the extension direction of the spraying part is the same as an extension direction of the structural part.

Furthermore, the vibration detection device is used for detecting the vibration condition of the lint filtration device when the cleaning device performs the cleaning operation. When a detection result of the vibration detection device meets the corresponding adjustment condition of the cleaning operation mode, the cleaning device adjusts the corresponding cleaning operation mode. The cleaning operation mode includes the cleaning angle and/or cleaning intensity and/or cleaning medium. For example, in actual use, if the lint filtration device vibrates obviously, the spraying cleaning angle of the cleaning device is appropriately increased, and water is selected as the cleaning medium. Compared with air, water has higher cleaning ability and has a more obvious clearing effect on accumulated lint, and a wide cleaning range can achieve the cleaning purpose to a greater extent. As the cleaning operation progresses, the amount of lint attached to the lint filtration device gradually decrease, then the cleaning medium is adjusted as gas, so that the impact of the cleaning operation on the function of the lint filtration device is reduced. Further, the cleaning angle is correspondingly decreased to reduce the cleaning area, so that the uncleaned part of the lint filtration device strictly performs the filtering operation, while another part continues to be cleaned, so that the performance of the filtering function of the lint filtration device is further ensured.

Through the laundry treatment equipment introduced in this embodiment, the cleaning device is connected to the lint filtration device, so that when the spraying part is used for cleaning the lint filtration device, the relative positional relation between the spraying part and the lint filtration device can be ensured, so that the cleaning medium sprayed by the spraying part is accurately sprayed to the lint filtration device. Further, vibration generated by the lint filtration device will drive the spraying part to vibrate together, then the lint filtration device and the spraying part vibration synchronously, and therefore the effectiveness of the spraying direction and spraying positions is ensured.

### Embodiment 12

As shown in Fig. 4, the vibration detection device of laundry treatment equipment in this embodiment includes a first detection piece 51 and a second detection piece 52 which are correspondingly arranged. The first detection piece 51 is used for obtaining the vibration condition of the lint filtration device, and the second detection piece 52 can sense the change of the first detection piece 51 and generate corresponding detection results. During the design of the equipment structure, a relatively stable positional relation between the second detection piece 52 and the laundry treatment equipment can be maintained; even the second detection piece 52 can be arranged on the laundry treatment equipment. The first detection piece 51 is connected to the lint filtration device, and can generate corresponding signals according to the vibration condition of the lint filtration device.

Further, multiple vibration detection devices are provided in this embodiment, and the multiple vibration detection devices respectively detect the vibration condition of different parts of the lint filtration device. Further, in the laundry treatment equipment in this embodiment, the connection function of the lint filtration device and the laundry treatment equipment is achieved via installation parts arranged at multiple positions, then the equipment controls the lint filtration device in a multi-point mode, and thus the lint filtration device can be connected to the equipment more evenly and firmly from multiple positions. Further, the vibration detection devices of the present disclosure detect the vibration condition of the lint filtration device via the installation parts. That is, the vibration detection devices detect the vibration condition at the connection positions of the lint filtration device and the equipment, the accuracy of the detection results is ensured, and the vibration condition of the lint filtration device can be truly and timely represented.

Through the laundry treatment equipment introduced in the present disclosure, the vibration detection devices are simple and reasonable in structure, high in coordination sensitivity between components. Movable parts (the first detection pieces) reflect the vibration condition of the lint filtration device, and fixed parts (the second detection pieces) represent the vibration condition of the lint filtration device, so that the accuracy and effectiveness of detection are ensured. When the lint filtration device vibrates, the installation parts are driven by the lint filtration device to vibrate together, then the first detection pieces 51 are driven to vibrate, the relative positional relation between the first detection pieces 51 and the second detection pieces 52 is changed, the first detection pieces 51 and the second detection pieces 52 continuously generate signals capable of representing the position changes, and therefore the purpose of detecting the vibration of the lint filtration device is achieved.

### Embodiment 13

In this embodiment, the vibration detection device is provided with at least two second detection pieces detecting two levels of the vibration condition. The second detection piece detects the vibration condition in different intensities and generates corresponding signals respectively. As shown in Fig. 5, the second detection piece in this embodiment includes a first-level second detection piece 521 and a second-level second detection piece 522 which are arranged opposite to the first detection piece. When only the first-level second detection piece 521 can sense the vibration range of the lint filtration device, a signal is generated correspondingly; and when the second-level second detection piece 522 also can sense the vibration range of the lint filtration device, then a signal different from the signal generated when only the first-level second detection piece 521 can sense the vibration range is generated.

Further, the vibration detection device in this embodiment is used for detecting the vibration condition of laundry treatment equipment executing the laundry treatment program. When the vibration detection device detects that the vibration condition of the lint filtration device is abnormal, the laundry treatment equipment adjusts the operating state of corresponding devices and then adjusts the vibration condition of the lint filtration device. It can be seen that through the laundry treatment equipment introduced in the present disclosure, the vibration detection device includes multiple levels of detection mechanisms, generate corresponding data on the vibration degree of the lint filtration device so that the laundry treatment equipment can perform corresponding treatment conveniently. For example, when the vibration detection devices with a weak detection level generate corresponding signals, the equipment continues to operate and allows corresponding devices to continue to improve the operating efficiency. When the vibration detection devices with a strong detection level generate corresponding signals, the equipment prohibits the corresponding devices from continuing to improve the operating efficiency. When the vibration detection devices with a stronger detection level generate corresponding signals, the equipment reduces the restriction on the corresponding devices to continue to improve the operating efficiency.

Further, the first detection piece in this embodiment includes a magnet; the second detection piece is a reed switch; and the distances between the second detection pieces and the corresponding first detection piece are different.

Alternatively, furthermore, the first detection piece in this embodiment includes a magnet; the second detection piece is a reed switch; and each one of the second detection pieces has different induction abilities for magnetism.

### Embodiment 14

The difference between laundry treatment equipment in this embodiment and the laundry treatment equipment in the foregoing embodiment is that the control system of the laundry treatment equipment obtains the cleanliness of the lint filtration device according to the detection result of vibration detection device and/or the operating state of corresponding devices. The control system displays the cleanliness of the lint filtration device to a user after the laundry treatment equipment completes the laundry treatment operation.

The cleanliness of the lint filtration device is obtained according to the detection result of the vibration detection device and/or the operating state of the corresponding devices, when the cleanliness reaches a set extent, the system starts to perform an automatic cleaning operation on the lint filtration device.

Through the laundry treatment equipment introduced in the present disclosure, the cleanliness of the lint filtration device is obtained according to the detection result of the vibration detection device and/or the operating state of cleaning device, and the cleanliness is fed back to the user, thus the user can have an intuitive sense of the cleaning condition of the lint filtration device, and the effect that the user is aware of the working condition of the lint filtration device and the working condition of the cleaning device is ensured.

### Embodiment 15

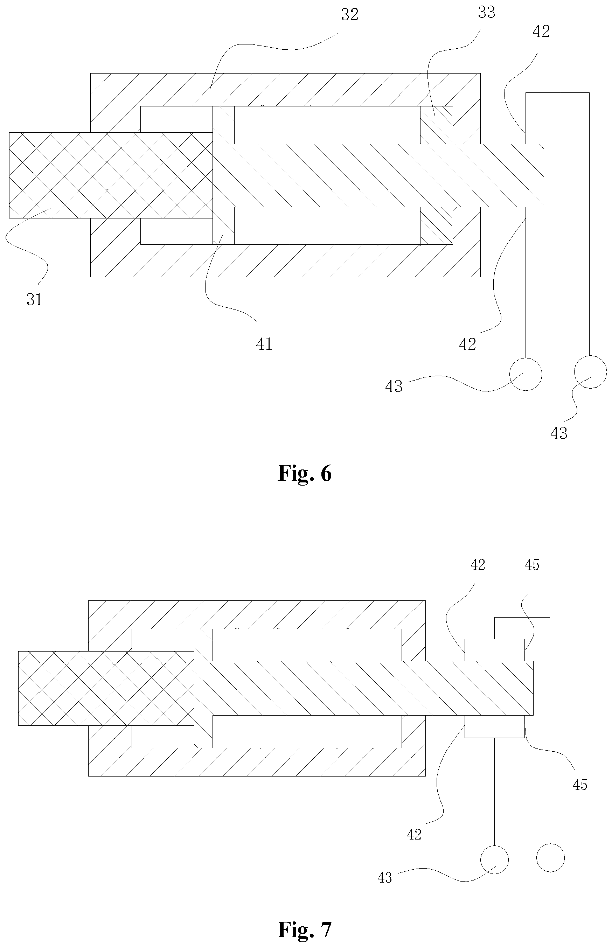

As shown in Fig. 6, in laundry treatment equipment of this embodiment, the cleaning device cleans the lint filtration device by spraying cleaning medium to the lint filtration device. The position detection device is used for detecting the relative position state between the lint filtration device and the laundry treatment equipment, and generates corresponding signals for adjusting the operation of the cleaning device.

The position detection device includes a detection connecting piece 41, a first detection point 42 and a controller 43 which mutually cooperate with one another. The detection connecting piece 41 obtains the relative positional relation between the lint filtration device and the laundry treatment equipment, and controls the connection relation between the first detection point 42 and the controller 43 mainly based on the relative positional relation to generate corresponding signals, and therefore the position state of the lint filtration device is detected. The detection connecting piece is arranged between the first unit of the installation part and the second unit of the installation part, and can move towards the second unit of the installation part when being pushed by the first unit of the installation part, thereby connecting the detection points with the controllers. The structure shown in Fig. 7 is a state in which the first detection point 42 and the controller 43 are connected by the detection connecting piece 41. The detection connecting piece 41 is made of a material for allowing currents to pass through. When the detection connecting piece 41 moves to the position shown in Fig. 7, a circuit is formed between the first detection point 42 and the controller 43 and then generates signals. When the first unit 31 of the installation part moves to a left side from the position shown in Fig. 7, it is indicated that the lint filtration device is far away from the laundry treatment equipment, so that the detecting connecting piece 41 also moves to the left side in Fig. 7, thereby disconnecting the circuit formed by the first detection point 42 and the controller 43 to generate signals.

Preferably, the relative position between the first detection point 42 and the controller 43 in this embodiment is fixed, and the connection relation between the first detection point 42 and the controller 43 are controlled by the detection connecting piece 41.

### Embodiment 16

As shown in Fig. 7, the position detection device in this embodiment is provided with multiple detection points, the multiple detection points respectively correspond to different detection values. Different detection signals are generated when different detection points are connected to the controllers. The detection connecting piece connects the detection points with the controllers according to the relative positional relation between the lint filtration device and laundry treatment equipment. Further, the detection connecting piece is connected with the lint filtration device. Therefore, the detection points in this embodiment at least include the first detection point 42 and a second detection point 45. When the moving distances of the detection connecting piece are different, the connection conditions of the multiple detection points are different, and different signals are generated to represent different position variation of the lint filtration device. During implementation, when the first detection point 42 is connected, it is indicated that the lint filtration device starts the filtering operation. As laundry treatment progresses, when the second detection point 45 is also connected, it is indicated that there are many lint attached to the lint filtration device, and the lint filtration device needs to be cleaned. At this time, the cleaning device is turned on to start cleaning the lint filtration device. As cleaning progresses, lint on the lint filtration device are gradually removed, then the second detection point 45 is disconnected, which indicates that the lint filtration device has recovered the cleaning ability. At this time, the cleaning device stops cleaning the lint filtration device.

### Embodiment 17

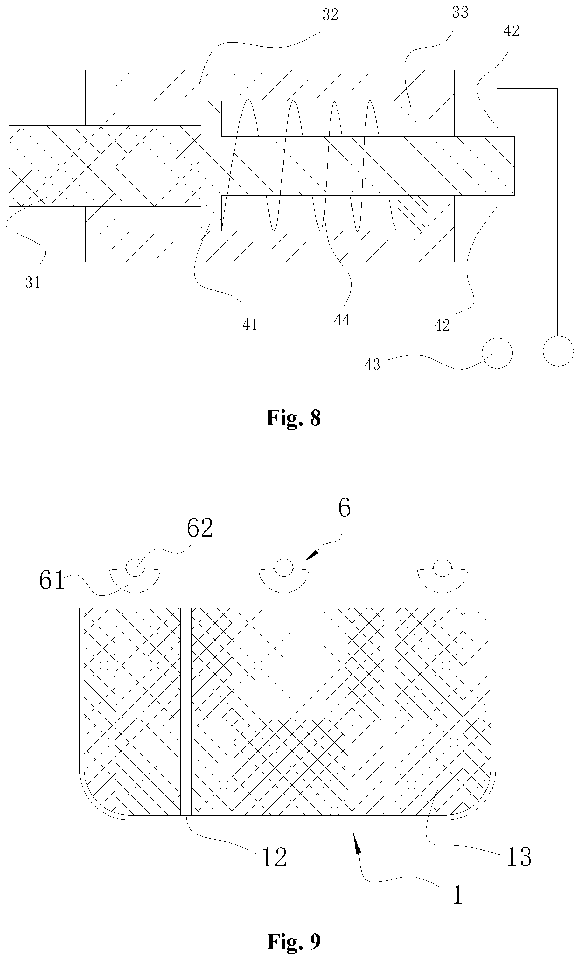

As shown in Fig. 8, the position detection device of this embodiment includes a return piece used for restoring the detection connecting piece to an initial position, thereby disconnecting detection points from controllers, and generating corresponding signals, so that the cleaning device adjusts the cleaning modes/ends the cleaning operation. The cleaning modes include the cleaning angle and/or cleaning intensity and/or cleaning medium.

Through laundry treatment equipment introduced in the present disclosure, by arranging the return device, the position detection device can be restored to the initial position after the detection is completed or the laundry treatment equipment stops working, the accuracy of the next detection is ensured, then the lint filtration device is restored to the initial position, and therefore a user can easily remove the lint filtration device.

Further, the cleaning modes in this embodiment include the selection of the cleaning angle and/or cleaning intensity and/or cleaning medium. The cleaning medium includes gas and/or liquid.

Through the laundry treatment equipment introduced in the present disclosure, various spraying medium can be selected, and multiple medium can be adopted selectively or alternately. For example, the lint filtration device can be sprayed with liquid when the lint filtration device starts to operate, when the variation degree of the position state of the lint filtration device is lowered and the variation of the position state is reduced to a certain value, the cleaning device then adjusts the spraying medium as gas, thus the lint filtration device is cleaned based on the premise of implementing the filtering function of the lint filtration device, and the cleaning process is prevented from affecting the cleaning function of the lint filtration device.

### Embodiment 18

The position detection device in this embodiment detects the position state of the lint filtration device by detecting the position change of an installation part. The position detection device is connected with the installation part.

Through laundry treatment equipment introduced in the present disclosure, the installation part is reasonably designed. The installation part includes multiple parts cooperate with one another, and then the installation part can generate corresponding signals according to the positions of the lint filtration device. Whether the lint filtration device changes the position can be detected, while the position variation of the lint filtration device can also be detected, meanwhile, qualitative and quantitative detection is achieved, and thus the equipment can be adjusted to different degrees according to different position offsets.

### Embodiment 19

As shown in Fig. 9, the difference between laundry treatment equipment in this embodiment and the laundry treatment equipment in the foregoing embodiment is that: multiple cleaning devices 6 are provided. Positions of the multiple cleaning devices 6 relative to the lint filtration device 1 are different. At least one of the multiple cleaning devices 6 is arranged above the lint filtration device 1. Each cleaning device includes the guiding part 62 for guiding cleaning medium and the spraying part 61 for spraying the cleaning medium. At least two of the multiple cleaning devices are different in time of executing and/or adjusting and/or ending the cleaning operation determined according to the detection results of a position detection device, so that the cleaning operations executed by at least two of the multiple cleaning devices are nonsynchronous.

In actual use, the starting sequence of multiple cleaning devices can be adjusted. Since the cleaning ranges of the cleaning devices are different, different areas of the lint filtration device can be cleaned at different times. Therefore, when the lint filtration device is being cleaned, at least one part of the lint filtration device does not need to be cleaned, the lint filtering function of the one part is effective, and thus it can be ensured that the filtering effect of the lint filtration device can be fully exerted even when other areas are cleaned.

### Embodiment 20

The difference between laundry treatment equipment in this embodiment and the laundry treatment equipment in the foregoing embodiment is that: a control system of the laundry treatment equipment obtains the cleanliness of the lint filtration device according to the detection results of the position detection device and/or the working state of cleaning devices. The control system displays the cleanliness of the lint filtration device to a user after the laundry treatment equipment completes the laundry treatment operation.

Through the laundry treatment equipment introduced in the present disclosure, the cleanliness of the lint filtration device is obtained according to the detection results of vibration detection devices and/or the working state of the cleaning devices, and the cleanliness is fed back to the user, then the user can have an intuitive feeling about the cleaning condition of the lint filtration device, and it is ensured that the user has a grasp of the working condition of the lint filtration device and the working condition of the cleaning devices.

The above embodiments are only the preferred embodiments of the present disclosure, and do not limit the present disclosure in any form. Although the present disclosure has been disclosed as above in preferred embodiments, the present disclosure is not limited thereto. Any technicians familiar with this patent can make some equivalent changes such as variations or modifications into equivalent embodiments according to the technical content suggested above without departing from the scope of the technical solutions of the present disclosure, and any simple variations, equivalent changes and modifications made to the above embodiments based on the technical essence of the present disclosure without departing from the content of the technical solutions of the present disclosure still fall within the scope of the present disclosure.

## Claims

1. Laundry treatment equipment, comprising a lint filtration device; wherein
a control system adjusts a connection relation between the lint filtration device and the laundry treatment equipment according to an operating state of the laundry treatment equipment.

2. The laundry treatment equipment according to claim 1, comprising a cleaning device for cleaning the lint filtration device; wherein
preferably, the control system adjusts the connection relation between the lint filtration device and the laundry treatment equipment according to the operating state of the laundry treatment equipment and/or an operating state of the cleaning device;
preferably, when the control system of the laundry treatment equipment sends out an instruction of executing a program for cleaning the lint filtration device, a connection strength between the lint filtration device and the laundry treatment equipment is enhanced.

3. The laundry treatment equipment according to claim 2, wherein the cleaning device cleans the lint filtration device when the laundry treatment equipment executes a laundry treatment program; and
preferably, the cleaning device sprays water and/or air to the lint filtration device for cleaning the lint filtration device.

4. The laundry treatment equipment according to claim 2, wherein the cleaning device cleans the lint filtration device by spraying a cleaning medium to the lint filtration device;
preferably, the cleaning medium comprise gas and/or liquid; and
preferably, the cleaning device comprises a first cleaning unit and a second cleaning unit,
a cleaning medium of the first cleaning unit is liquid, and a cleaning medium of the second cleaning unit is gas.

5. The laundry treatment equipment according to claim 2 or 4, wherein the cleaning device comprises a spraying part and a guiding part which are communicated with each other internally, a channel for fluid to flow is formed inside the spraying part and the guiding part; and
the cleaning device further comprises a control part for controlling the channel to be opened or closed;
preferably, the spraying part, the guiding part and the control part are connected in sequence;
preferably, the cleaning device is arranged above the lint filtration device;
preferably, the spraying part is of a tubular structure, and one side of the spraying part is provided with spraying holes;
preferably, the spraying holes are distributed along an extension direction of the spraying part; and
preferably, the control part controls a flow rate of the cleaning medium flowing through the channel.

6. The laundry treatment equipment according to claim 5, wherein the cleaning device comprises an adjustment part for controlling a spraying direction of the spraying part so that the cleaning device adjusts an angle for cleaning the lint filtration device;
preferably, the adjustment part adjusts a rotation angle of the spraying part, the spraying part rotates around an axial direction of the spraying part or a direction parallel to the axial direction of the spraying part, and a spraying distance is changed while the spraying direction of the spraying part being changed;
preferably, the adjustment part is arranged at an end of the spraying part;
preferably, the adjustment part is arranged at an other end, opposite to the guiding part, of the spraying part; and
preferably, the adjustment part is a motor.

7. The laundry treatment equipment according to any one of claims 2-6, wherein the lint filtration device comprises a structural part and a filtering part arranged on the structural part,
the structural part is for structural support, and the filtering part is for filtering;
preferably, the cleaning device is connected to the lint filtration device;
preferably, the spraying part is connected to the structural part;
preferably, the extension direction of the spraying part is the same as an extension direction of the structural part;
preferably, the structural part is provided with an operating part for a user installing and removing the lint filtration device; and
preferably, the operating part is of a handle shape.

8. The laundry treatment equipment according to any one of claims 1-7, wherein the lint filtration device is installed on the laundry treatment equipment via an installation part;
preferably, the installation part comprises a first unit arranged on the lint filtration device and a second unit arranged on the laundry treatment equipment, and the first unit and the second unit are matched and connected; and
preferably, the first unit and the second unit are matched and connected in a concave-convex fit.

9. The laundry treatment equipment according to claim 8, wherein the control system adjusts the connection relation between the lint filtration device and the laundry treatment equipment via the installation part;
preferably, the installation part adjusts the connection strength between the lint filtration device and the laundry treatment equipment when a control condition is changed;
preferably, the control condition comprises a current intensity, and the first unit and/or the second unit comprises an electromagnet;
preferably, at least two installation parts are provided;
preferably, the installation parts are arranged at different positions respectively; and
preferably, at least one of the installation parts adjusts the connection relation between the lint filtration device and the laundry treatment equipment.

10. The laundry treatment equipment according to claim 8 or 9, wherein when the control system of the laundry treatment equipment sends out an instruction of executing the laundry treatment program, the connection strength between the lint filtration device and the laundry treatment equipment is enhanced;
preferably, the connection strength between the lint filtration device and the laundry treatment equipment is enhanced via the installation part;
preferably, when the control system of the laundry treatment equipment sends out the instruction of executing the laundry treatment program, the connection strength between the first unit and the second unit is enhanced;
preferably, when the control system of the laundry treatment equipment sends out the instruction of executing the laundry treatment program, the installation part adjusts the control condition accordingly and then adjusts the connection strength between the lint filtration device and the laundry treatment equipment;
preferably, when the control system of the laundry treatment equipment sends out the instruction of executing the laundry treatment program, the current intensity is increased, and the connection strength between the lint filtration device and the laundry treatment equipment is enhanced.

11. The laundry treatment equipment according to claim 8 or 9, wherein when the control system of the laundry treatment equipment sends out an instruction of executing the program for cleaning the lint filtration device, the connection strength between the first unit and the second unit is enhanced;
preferably, when the control system of the laundry treatment equipment sends out the instruction of executing the program for cleaning the lint filtration device, the installation part adjusts the control condition accordingly and then adjusts the connection strength between the lint filtration device and the laundry treatment equipment; preferably, when the control system of the laundry treatment equipment sends out the instruction of executing the program for cleaning the lint filtration device, the current intensity is increased, and the connection strength between the lint filtration device and the laundry treatment equipment is adjusted.

12. The laundry treatment equipment according to any one of claims 2-7, comprising a vibration detection device for detecting a vibration condition of the lint filtration device during an operation of the laundry treatment equipment, wherein
the cleaning device adjusts a cleaning operation mode to the lint filtration device according to a detection result of the vibration detection device; and
preferably, the cleaning device determines one or more items from a group of cleaning angle, cleaning intensity, and cleaning medium to the lint filtration device according to the detection result of the vibration detection device.

13. The laundry treatment equipment according to claim 12, wherein the lint filtration device is installed on the laundry treatment equipment via the installation part;
preferably, the vibration detection device detects the vibration condition of the lint filtration device via the installation part; and
the vibration detection device comprises a switch for controlling a working state of the vibration detection device.

14. The laundry treatment equipment according to claim 12, wherein when the laundry treatment equipment performs a cleaning operation, the vibration detection device detects the vibration condition of the lint filtration device; and
when the detection result of the vibration detection device meets an adjustment condition of the cleaning operation mode, the cleaning device adjusts the cleaning operation mode; and
preferably, the cleaning operation mode comprises one or more items from the group of cleaning angle, cleaning intensity, and cleaning medium.

15. The laundry treatment equipment according to any one of claims 12-14, wherein the vibration detection device comprises a first detection piece and a second detection piece;
the first detection piece detects the vibration condition of the lint filtration device; and the second detection piece detects a change of the first detection piece, and generates a detection result;
preferably, the first detection piece is arranged on the lint filtration device, and the change of the first detection piece occurs according to the vibration condition of the lint filtration device; and
preferably, at least two vibration detection devices are provided, and each of the vibration detection devices detects the vibration condition of a part of the lint filtration device respectively.

16. The laundry treatment equipment according to claim 12, wherein the vibration detection device is provided with at least two second detection pieces for detecting different levels of the vibration condition, and
the second detection pieces detect the vibration condition in different intensities correspondingly and respectively generate signals;
preferably, the first detection piece comprises a magnet; the second detection piece is a reed switch; and
a distance between each of the second detection pieces and the first detection piece is different; and
preferably, the first detection piece comprises a magnet; the second detection piece is a reed switch; and
the second detection pieces have different conduction abilities for magnetism.

17. The laundry treatment equipment according to any one of claims 2-7, comprising a position detection device for detecting a position state of the lint filtration device during operation of the laundry treatment equipment, wherein
the cleaning device determines a time of executing the cleaning operation according to a detection result of the position detection device; and
preferably, the cleaning device determines a time of adjusting the cleaning mode and/or ending the cleaning operation according to a detection result of the position detection device.

18. The laundry treatment equipment according to claim 17, wherein the position detection device detects a relative position state between the lint filtration device and the laundry treatment equipment and generates a signal; and
the control system adjusts an operation of the cleaning device according to the signal;
preferably, the position detection device comprises a detection connecting piece, a detection point and a controller which mutually cooperate with one another; and
the detection connecting piece obtains a relative positional relation between the lint filtration device and the laundry treatment equipment, controls a connection relation between the detection point and the controller based on the relative positional relation to generate corresponding signal, and then detects the position state of the lint filtration device;
preferably, a relative position between the detection point and the controller is fixed, and the detection point and the controller are controlled by the detection connecting piece to be connected or disconnected;
preferably, at least two detection points are provided, the detection points respectively correspond to different detection values, and different detection signals are generated when the detection points are connected to the controllers respectively; and
the detection connecting piece connects the detection points with the controllers according to the relative positional relation between the lint filtration device and the laundry treatment equipment; and
preferably, the detection connecting piece is connected to the lint filtration device.

19. The laundry treatment equipment according to claim 18, wherein the position detection device comprises a return piece for restoring a position of the detection connecting piece, then the detection points are disconnected from the controllers, and a signal is generated, so that the cleaning device adjusts the cleaning mode or ends the cleaning operation;
preferably, the cleaning mode comprises one or more items from a group of the cleaning angle, cleaning intensity and cleaning medium;
preferably, restoring the position comprises restoring an initial position.

20. The laundry treatment equipment according to claim 19, wherein the lint filtration device is arranged on the laundry treatment equipment via an installation part;
preferably, at least two installation parts are provided; and
preferably, the installation parts are arranged at different positions correspondingly.

21. The laundry treatment equipment according to claim 20, wherein the position detection device detects the position state of the lint filtration device by detecting a position change of the installation part;
preferably, the position detection device is connected to the installation part; and
preferably, the detection connecting piece is connected to the installation part.

22. The laundry treatment equipment according to any one of claims 17-21, wherein at least two cleaning devices are provided, and positions of the cleaning devices relative to the lint filtration device are different;
preferably, at least one of the cleaning devices is arranged above the lint filtration device;
further, at least two of the cleaning devices are different in time and/or mode of executing and/or adjusting and/or ending the cleaning operation determined according to the detection result of the position detection device, so that the cleaning operations executed by at least two of the cleaning devices are nonsynchronous;
preferably, the control system of the laundry treatment equipment obtains a cleanliness of the lint filtration device according to the detection result of the position detection device and/or the working state of the cleaning device; and
preferably, the control system displays the cleanliness of the lint filtration device to a user after the laundry treatment equipment completes the laundry treatment operation.

23. The laundry treatment equipment according to claim 1, wherein the laundry treatment equipment is a washing machine or drying machine or washing-drying integrated machine.
